# EUROPÄISCHE PATENTSCHRIFT

(11) **EP 1 447 524 B1**
(45) Veröffentlichungstag und Bekanntmachung des Hinweises auf die Patenterteilung: **08.10.2014**
(21) Anmeldenummer: 04100379.9
(22) Anmeldetag: 03.02.2004
(51) Int. Cl.: F04D 29/32, F04D 29/02, F01D 5/14, F01D 5/28

(54) **Hybrid-Schaufel für thermische Turbomaschinen**
Hybrid blade for thermal turbomachines
Aube hybride pour turbomachines thermiques

(30) Priorität: 13.02.2003 DE 10305912
(43) Veröffentlichungstag der Anmeldung: 18.08.2004
(73) Patentinhaber: Alstom Technology Ltd, 5400 Baden (CH)
(72) Erfinder: Kramer, Thomas, 5408 Ennetbaden (CH); Künzler, Andreas, 5400 Baden (CH); Nazmy, Mohamed, Yousef, Dr., 5442 Fislisbach (CH); Staubli, Markus, 5605 Dottikon (CH)

(56) Entgegenhaltungen:
- DE-A1- 10 013 373
- GB-A- 713 089
- US-A- 4 094 615
- US-A- 4 142 836
- US-A- 4 869 645

## Beschreibung

### Technisches Gebiet

Die Erfindung bezieht sich auf das Gebiet der Kraftwerkstechnik. Sie betrifft eine Hybrid-Schaufel für thermische Turbomaschinen gemäss dem Oberbegriff der Patentansprüche 1 und 2.

### Stand der Technik

Thermische Turbomaschinen, d. h. Turbinen und Verdichter, bestehen im wesentlichen aus einem mit Laufschaufeln bestückten Rotor und einem Stator, in den Leitschaufeln eingehängt sind. Die Laufschaufeln und die Leitschaufeln bestehen wiederum im wesentlichen aus einem Schaufelblatt und aus einem Schaufelfuss. Um die Schaufeln auf dem Rotor bzw. im Stator befestigen zu können, sind im Stator und auf der Rotorwelle Nuten eingestochen. In diese Nuten werden die Füsse der Leit- und Laufschaufeln eingeschoben und dort arretiert.

Die feststehenden Leitschaufeln haben die Aufgabe, den Strom des zu verdichtenden bzw. des zu entspannenden gasförmigen Mediums so auf die rotierende Laufbeschaufelung zu lenken, dass die Energieumwandlung mit bestmöglichem Wirkungsgrad erfolgt.

Es ist bekannt, Schaufeln einstückig aus einem einzigen Material, z. B. aus einer Nickel-Basis-Superlegierung für Gasturbinen oder aus rostfreiem Stahl für Verdichter herzustellen. Derartige Schaufeln werden nachfolgend als konventionelle Schaufeln bezeichnet.

Es ist auch bekannt, Schaufeln in Hybrid-Bauweise herzustellen. Bei der Hybrid-Bauweise werden verschiedene Werkstoffe mit unterschiedlichen physikalischen Eigenschaften miteinander kombiniert, um eine optimale Auslegung einer Schaufel zu erhalten. So ist z. B. eine Hybrid-Rotorschaufel für ein Triebwerk aus DE 101 10 102 A1 bekannt, bei welcher die Hinterkante des Schaufelblattes, die nur eine aerodynamische Funktion hat, aus einem Leichtbauwerkstoff, vorzugsweise einem Faserverbundstoff, z. B. Kohlenfaser-Verbundwerkstoff, hergestellt ist. Durch eine solche (leichte) Hinterkante lässt sich vorteilhaft das Gewicht der Schaufel reduzieren. Die Verbindung der beiden Schaufelblattteile (schwere metallische Vorderkante und leichte Hinterkante aus Faserverbundwerkstoff) erfolgt durch Kleben oder Vernieten.

Eine ähnliche Lösung ist in WO 99/27234 beschrieben. Dort wird ein Rotor mit integraler Beschaufelung, insbesondere für ein Triebwerk, offenbart, an dem umfänglich Rotorschaufeln angeordnet sind, wobei die Rotorschaufel zur Verringerung von Schwingungen einen metallischen Schaufelfuss, einen metallischen Schaufelblattabschnitt, der wenigstens einen Teil der Schaufelvorderkante und des daran angrenzenden Bereichs der Schaufelfläche bildet, und ein Schaufelblatt aus faserverstärktem Kunststoff aufweisen. Auch hier erfolgt die Befestigung des Schaufelblattes aus Kunststoff an dem metallischen Schaufelblattabschnitt durch Kleben/Nieten oder durch Klemmen.

Dieser bekannte Stand der Technik hat die folgend aufgeführten Nachteile. Einerseits halten die genannten Befestigungsarten über einen langen Zeitraum keinen grossen Belastungen Stand, anderseits sind die faserverstärkten Kunststoffe nur in bestimmten Temperaturbereichen einsetzbar, so dass diese bekannten technischen Lösungen insbesondere nur für die Triebwerkstechnik geeignet sind. Ausserdem wird die Charakteristik des Schaufelblattes (mechanische Eigenschaften, Oxidationsbeständigkeit, Reibungseigenschaften) gegenüber den aus einem einzigen Material bestehenden Schaufelblättern verändert, was sich nachteilig auf das Betriebsverhalten der Maschine auswirken kann.

Weiterhin ist aus EP 0 513 407 B1 eine Turbinenschaufel aus einer Legierung auf der Basis eines dotierstoffhaltigen Gamma-Titanaluminides bekannt, welche aus Schaufelblatt, Schaufelfuss und gegebenenfalls Schaufeldeckband besteht. Bei der Herstellung dieser Schaufel wird der Gusskörper derart partiell wärmebehandelt und warmverformt, dass das Schaufelblatt anschliessend eine grobkörnige Struktur aufweist, die zu hoher Zug- und Zeitstandfestigkeit führt, und dass der Schaufelfuss und/oder das Schaufeldeckband eine feinkörnige Struktur aufweist, die zu einer gegenüber dem Schaufelblatt erhöhten Duktilität führt. Gewichtsreduktionen gegenüber konventionellen Schaufeln sind auf diese Weise aber nicht realisierbar.

Aus US-A-4 869 645 ist eine zusammengesetzte Gasturbinenschaufel, bestehend aus Fussstück, Schaufelblatt und Deckplatte oder Deckband bekannt, bei der das Schaufelblatt aus einer oxyddispersionsgehärteten Nickel-Basis-Superlegierung und der Schaufelfuss aus einer nichtdispersionsgehärteten Nickel-Basis-Superlegierung hergestellt sind. Damit soll den unterschiedlichen thermischen und mechanischen Belastungen von Schaufelfusspartie und Schaufelkopfpartie unter Berücksichtigung des Normalbetriebes, der Betriebsunterbrüche sowie plötzlichen Lastabwurfes Rechnung getragen werden.

Im Dokument GB 713 089 A werden zusammengesetzte Stator-Schaufel beschrieben, bei denen das Schaufelblatt aus einem rostfreien CrNi-Stahl besteht und der Schaufelfuss aus Aluminium oder einer Aluminium-Basislegierung, wobei die beiden Teile stoffschlüssig, d.h. auf metallurgischem Wege miteinander verbunden sind, was nachteilig einen erhöhten Herstellungsaufwand und - bedingt durch die notwendige Wärmebehandlung - mögliche negative Materialeigenschaftsänderungen hervorruft.

### Darstellung der Erfindung

Ziel der Erfindung ist es, die genannten Nachteile des Standes der Technik zu vermeiden. Der Erfi ndung liegt die Aufgabe zu Grunde, eine Hybrid-Schaufel, d. h. eine Schaufel aus unterschiedlichem Material, für thermische Turbomaschinen zu entwickeln, welche aufgrund eines reduzierten Gewichtes die Lebensdauer insbesondere der Rotor/Schaufelbefestigung erhöht. Die Schaufel soll vergleichsweise einfach herstellbar sein. Weiterhin soll die Charakteristik des Schaufelblattes gegenüber konventionellen Schaufeln erhalten bleiben. Ausserdem soll die Befestigung der Teile aus unterschiedlichem Material auch höchsten Beanspruchungsbedingungen, wie hohen Temperaturen und hohen Fliehkräften auch bei langen Betriebszeiten Stand halten.

Erfindungsgemäss wird diese Aufgabe bei einer Hybrid-Schaufel für thermische Turbomaschinen gemäss Oberbegriff des Patentanspruches 1 dadurch gelöst, dass die erfindungsgemässe Schaufel eine Verdichterschaufel, insbesondere Hochdruckverdichterschaufel, ist, bei welcher das Schaufelblatt aus einem rostfreien Cr-Ni-Stahl und der Schaufelfuss aus einer Hochtemperatur-Titanlegierung oder einer intermetallischen γ-TiAI-Verbindung oder einer intermetallischen orthorhombischen TiAI-Verbindung besteht.

Die Vorteile der Erfindung bestehen darin, dass die erfindungsgemässe Hybrid-Schaufel gegenüber einer konventionellen Schaufel, bei der sowohl das Schaufelblatt als auch der Schaufelfuss aus dem gleichen metallischen Material bestehen, ein geringeres Gewicht aufweist. Dadurch wird insbesondere die Lebensdauer der Rotor/Schaufelbefestigung erhöht. Die Charakteristik des Schaufelblattes bleibt im Vergleich zu konventionellen Schaufeln erhalten. Ausserdem hält infolge der formschlüssigen mechanischen Verbindung von Schaufelblatt und Schaufelfuss, d. h. der Teile aus unterschiedlichem Material, die Schaufel auch höchsten Beanspruchungsbedingungen, wie hohen Temperaturen, hohen Fliehkräften, langen Betriebszeiten usw. Stand. So gibt es beispielsweise keine metallurgische Verbindung zwischen den beiden Teilen, welche eine Schwächung des Gefüges verursachen könnte.

Die Hochdruckverdichterschaufeln weisen relativ dünne Schaufelblätter und relativ grosse kompakte Schaufelfüsse auf. Berücksichtigt man neben diesen Unterschieden in den geometrischen Massen auch noch die geringere spezifische Dichte des Schaufelfussmaterials im Vergleich zum Schaufelblattmaterial (nur ca. 50-70 %), dann wird die enorme Gewichtseinsparung gegenüber konventionellen Schaufeln offensichtlich. Insbesondere bei den rotierenden Laufschaufeln eines Hochdruckverdichters, die Temperaturen bis zu ca. 600 °C ausgesetzt sein können, wirkt sich das vorteilhaft auf eine Erhöhung die Lebensdauer der Rotor/Statorverbindung aus.

Erfindungsgemäss wird die Aufgabe gemäss Oberbegriff des Patentanspruches 2 dadurch gelöst, dass es sich bei der erfindungsgemässen Schaufel um eine Turbinenschaufel handelt, bei welcher das Schaufelblatt aus einer Superlegierung, beispielsweise einer Nickel-Basis-Superlegierung, besteht und der Schaufelfuss aus einer Hochtemperatur-Titanlegierung oder einer intermetallischen γ-Titanaluminid-Legierung oder einer intermetallischen orthorhombischen Titanaluminid-Legierung besteht. Auch hier wird im Vergleich zu konventionellen Schaufeln, die aus einem einzigen Material, beispielsweise einer Nickel-Basis-Superlegierung bestehen, das Gewicht der Schaufel deutlich reduziert.

### Kurze Beschreibung der Zeichnungen

In der Zeichnung ist ein Ausführungsbeispiel der Erfindung dargestellt. Es zeigen:
- Fig. 1: eine perspektivische Darstellung einer erfindungsgemässen Hochdruckverdichterschaufel;
- Fig. 2: einen Längsschnitt der Schaufel entlang der Linie II-II gemäss Fig. 1;
- Fig. 3: die Abhängigkeit der auf die Dichte bezogenen Zeitstandfestigkeit für eine Ti-Legierung bzw. einen rostfreien Stahl von der Zeit bis zum Bruch;
- Fig. 4: die Abhängigkeit der auf die Dichte bezogenen Zugfestigkeit für eine Ti-Legierung bzw. einen rostfreien Stahl von der Temperatur;
- Fig. 5: die Abhängigkeit der auf die Dichte bezogenen Streckgrenze für eine Ti-Legierung bzw. einen rostfreien Stahl von der Temperatur und
- Fig. 6: die Abhängigkeit des auf die Dichte bezogenen E-Moduls für eine Ti-Legierung bzw. einen rostfreien Stahl von der Temperatur.

In den Figuren sind jeweils gleiche Positionen mit den gleichen Bezugszeichen versehen.

### Wege zur Ausführung der Erfindung

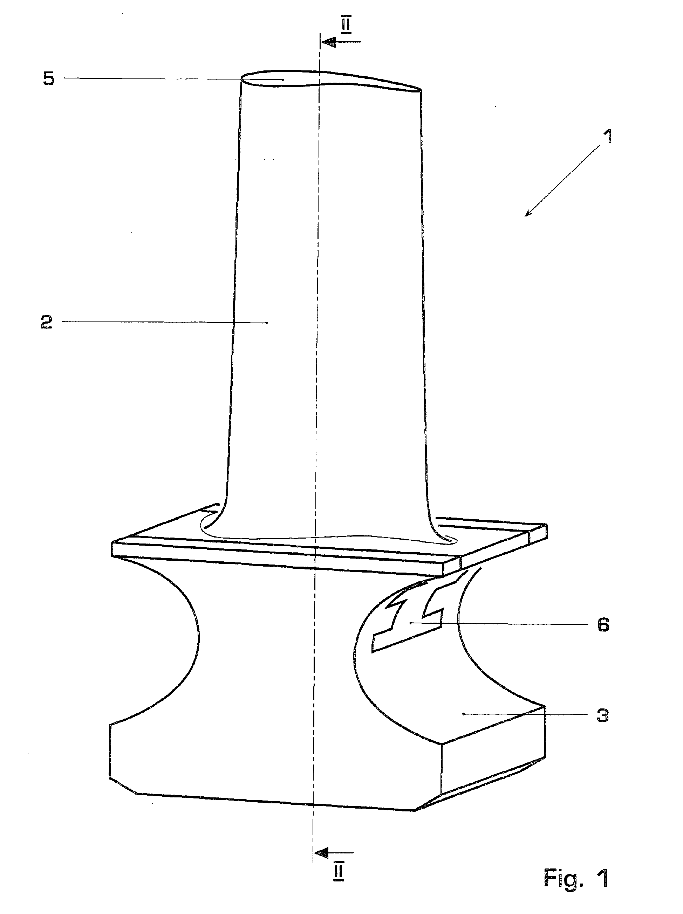

Nachfolgend wird die Erfindung anhand eines Ausführungsbeispieles und der Fig. 1 bis 6 näher erläutert.

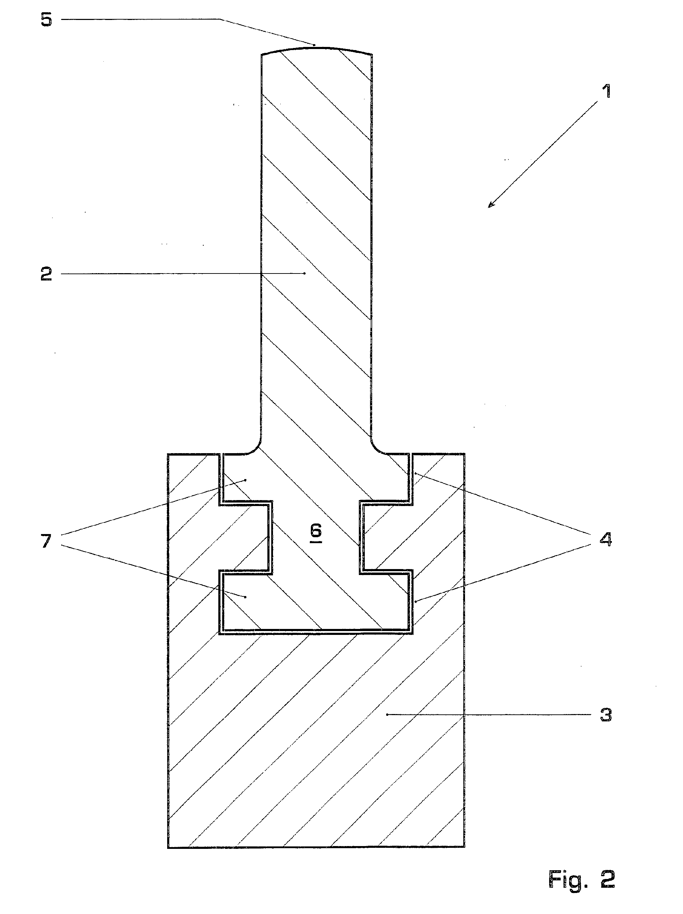

Fig. 1 zeigt eine perspektivische Darstellung einer erfindungsgemässen Hybrid-Schaufel 1, während Fig. 2 einen Längsschnitt der Hybrid-Schaufel 1 entlang der Linie II-II gemäss Fig. 1 zeigt. Im vorliegenden Ausführungsbeispiel handelt es sich um die Laufschaufel eines Hochdruckverdichters einer Gasturbine. Derartige Laufschaufeln werden beispielsweise bei einem Druck von ca. 32 bar mehreren Tausend Stunden lang einer Temperatur von ca. 600 °C ausgesetzt.

Die erfindungsgemässe Hybrid-Schaufel 1 besteht aus einem Schaufelblatt 2 und einem Schaufelfuss 3. Das Schaufelblatt 2 des Hochdruckverdichters ist, wie es bekannter Stand der Technik ist, relativ dünn ausgebildet und aus einem rostfreien CrNi-Stahl hergestellt. Erfindungsgemäss ist nun der Schaufelfuss 3, welcher im Vergleich zum Schaufelblatt 2 der Schaufel 1 relativ kompakt und grossflächig ausgebildet ist, aus einem Material mit einer geringeren Dichte hergestellt als der Dichte des Materials, aus welchem das Schaufelblatt 2 hergestellt ist. Im vorliegenden Ausführungsbeispiel besteht der Schaufelfuss 3 aus einer Ti-Legierung (nahezu α-Phase).

Im Einzelnen weist der rostfreie Stahl des Schaufelblattes 2 folgende chemische Zusammensetzung (in Gew.-%) auf: 0.12 C, < 0.8 Si, < 1.0 Mn, 17 Cr, 14.5 Ni, < 0.5 Mo, 3.3 W, < 1 Ti, < 0.045 P, <0.03 S, Rest Fe.

Die Ti-Legierung des Schaufelfusses 3 hat dagegen die folgende chemische Zusammensetzung (in Gew.-%): 0.06 C, 0.4 Si, 5.8 Al, 4 Sn, 4 Zr, 0.5 Mo, < 0.05 Fe, 0.11 O, < 0.03 N, <0.006 H, Rest Ti.

In Tabelle 1 sind die physikalischen Eigenschaften der beiden Legierungen gegenübergestellt.

**Tabelle 1: Physikalische Eigenschaften der verschiedenen Werkstoffe der erfindungsgemässen Hybrid-Schaufel**

| | Dichte in g/cm³ | Wärmeausdehungskoeffizient in K⁻¹ |
|---|---|---|
| Ti-Legierung | 4.55 | 10.9 x 10⁻⁶ |
| Rostfreier Stahl | 7.9 | 18.6 x 10⁻⁶ |

Die verwendete Ti-Hochtemperaturlegierung für den Schaufelfuss 3 weist nur eine Dichte auf, die ca. 58 % der Dichte des rostfreien CrNi-Stahles für das Schaufelblatt 2 beträgt. Der Wärmeausdehnungskoeffizient des Schaufelfuss-Materials beträgt ebenfalls nur ca. 59 % des Wärmeausdehnungskoeffizienten des rostfreien Stahles für das Schaufelblatt 2. Da das Schaufelblatt 2 bei den Hochdruckverdichterschaufeln relativ dünn ist und der Schaufelfuss 3 wesentlich grössere geometrische Abmasse hat als das Schaufelblatt 2 ergibt sich eine enorme Gewichtseinsparung der erfindungsgemässen Hybrid- Schaufeln 1 gegenüber konventionellen Schaufeln für Hochdruckverdichter, bei welchen sowohl das Schaufelblatt 1 als auch der Schaufelfuss 2 aus rostfreiem CrNi-Stahl gefertigt sind. Da die rotierenden Laufschaufeln eines Hochdruckverdichters einer Gasturbinenanlage bei Temperaturen bis zu ca. 600 °C stark beansprucht werden, wirkt sich die Gewichtsreduktion vorteilhaft auf eine Erhöhung die Lebensdauer der Rotor/Statorverbindung aus.

Erfindungsgemäss erfolgt die Fixierung des Schaufelblattes 2 im Schaufelfuss 3 auf mechanischem Wege, indem zwischen den beiden Teilen 2 und 3 ein Formschluss realisiert wird. Dazu sind, wie gut in Fig. 2 erkennbar ist, im Schaufelfuss 3 Aussparungen 4 vorgesehen, in welche das Schaufelblatt 2 formschlüssig eingeschoben wird. Zu diesem Zwecke weist das Schaufelblatt 2 an seinem der Schaufelspitze 5 gegenüberliegenden Ende 6 Vorsprünge 7 auf, welche passende Gegenstücke zu den Aussparungen 4 sind. Eine derartige formschlüssige mechanische Verbindung von Schaufelblatt 2 und Schaufelfuss 3 gewährleistet, dass selbst bei hohen Beanspruchungsbedingungen die Verbindung der beiden Teile 2 und 3 dauerhaft ist. Ausserdem bleibt vorteilhaft die Charakteristik des Schaufelblattes 2 im Vergleich zu konventionellen Schaufeln erhalten.

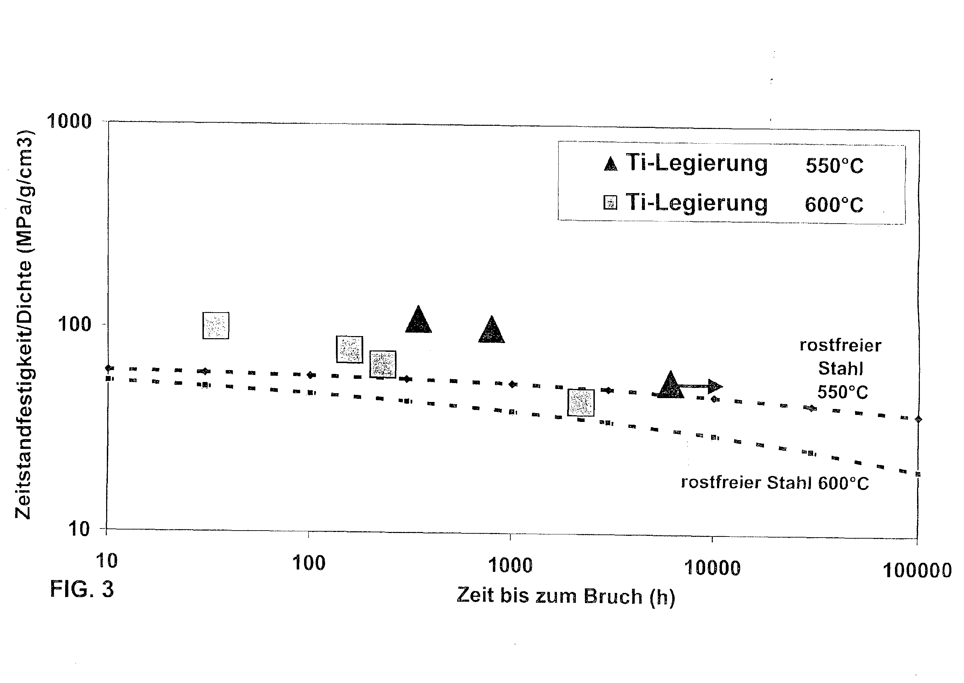

In Fig. 3 ist die Abhängigkeit der auf die Dichte bezogenen Zeitstandfestigkeit für die oben beschriebene Ti-Legierung bzw. den rostfreien CrNi-Stahl von der Zeit bis zum Bruch dargestellt, und zwar bei Beanspruchungstemperaturen von 550 °C und 600 °C. Die für den Schaufelfuss 3 eingesetzte leichte Ti-Legierung weist bei beiden Temperaturen über den gesamten untersuchten Zeitbereich bessere Werte auf als der rostfreie Stahl.

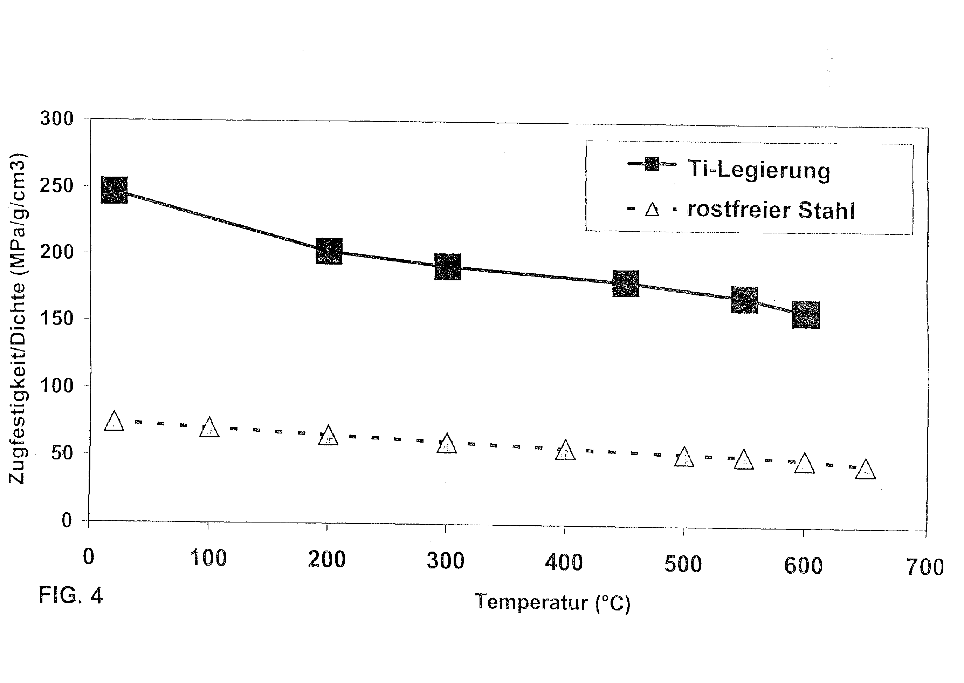

Fig. 4 zeigt die Abhängigkeit der auf die Dichte bezogenen Zugfestigkeit für die oben beschriebene Ti-Legierung bzw. den rostfreien Stahl von der Temperatur im Bereich von Raumtemperatur bis 650 °C. Über den gesamten Temperaturbereich hat die Ti-Legierung bessere Werte als der rostfreie Stahl.

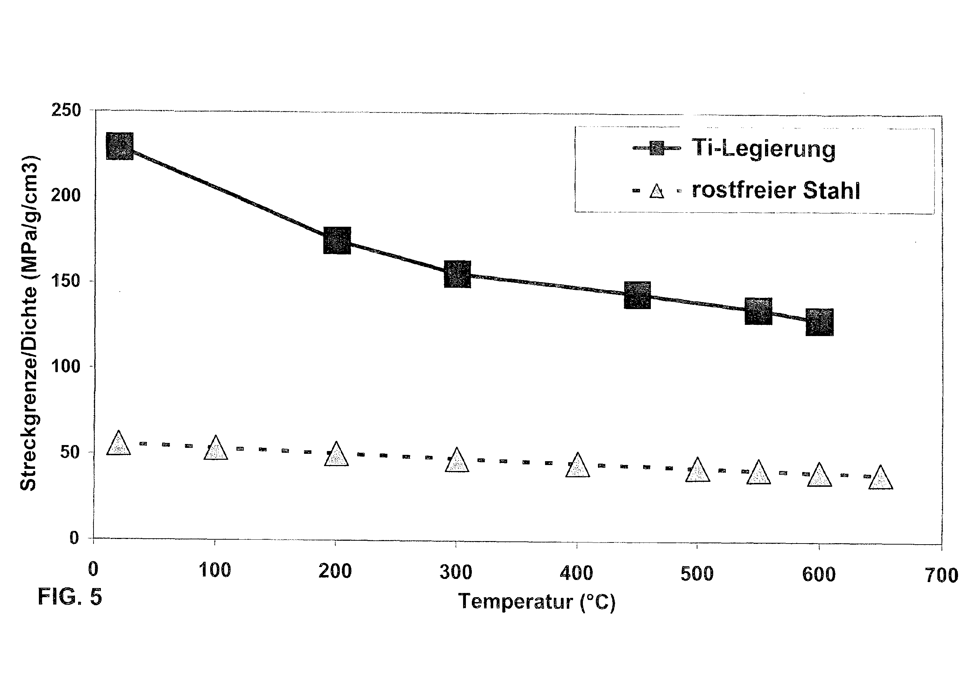

Das gilt auch für die in Fig. 5 dargestellte Abhängigkeit der auf die Dichte bezogenen Streckgrenze. Auch hier weist die Ti-Legierung bessere Werte als der rostfreie Stahl auf.

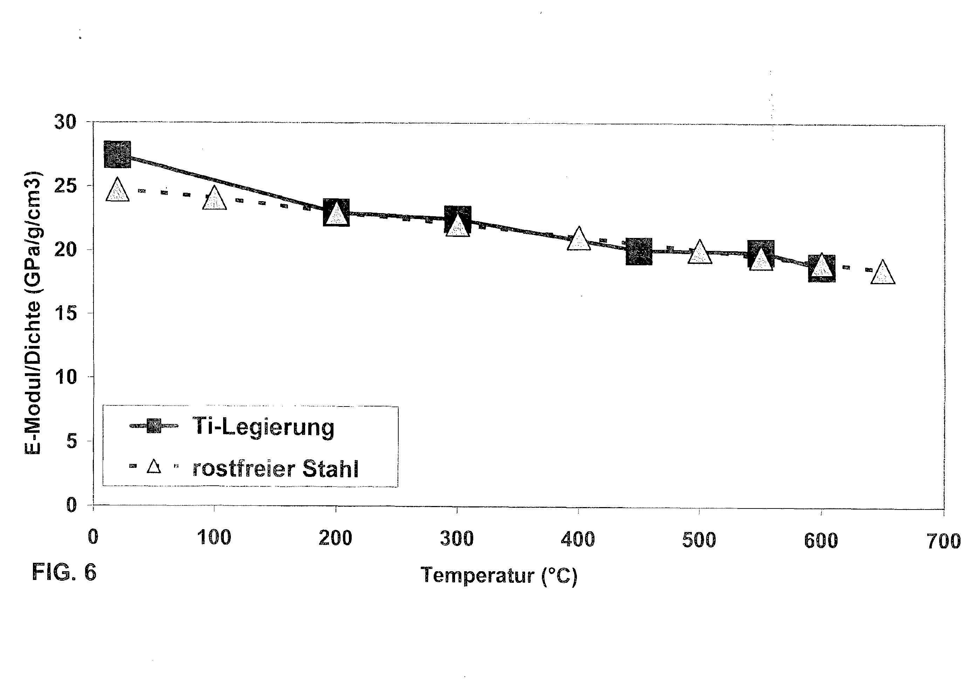

In Fig. 6 ist die Abhängigkeit des auf die Dichte bezogenen E-Moduls für die oben beschriebene eine Ti-Legierung bzw. den rostfreien CrNi-Stahl von der Temperatur im Bereich von Raumtemperatur bis 650 °C dargestellt. Während im unteren Temperaturbereich die Ti-Legierung dem Stahl geringfügig überlegen ist, haben beide Legierungen ab ca. 200 °C etwa gleiche auf die Dichte bezogenen E-Modul-Werte.

Selbstverständlich ist die Erfindung nicht auf das beschriebene Ausführungsbeispiel beschränkt.

Der Schaufelfuss 3 der Hybrid-Schaufel 1 des Hochdruckverdichters kann beispielsweise auch aus einer bekannten intermetallischen γ -Titanaluminid-Legierung mit einer Dichte von nur 4.12 g/cm³ hergestellt sein (z. B. Ti-47Al-2Nb-2Mn-0.8%TiB₂), während das Schaufelblatt wiederum aus CrNi-Stahl hergestellt ist. Dies hat den Vorteil einer noch höheren Gewichtsreduktion auf Grund der noch geringeren Dichte des Materials des Schaufelfusses 3 und damit einer Verlängerung der Lebensdauer der Schaufel. Ausserdem können damit bei gleichbleibender Schaufelblattcharakteristik höhere Betriebstemperaturen von bis zu 700-750 °C realisiert werden.

Es bietet sich auch der Einsatz einer ebenfalls aus dem Stand der Technik bekannten intermetallischen orthorhombischen Titanaluminid-Legierung mit einer Dichte von 4.55 g/cm³ für den Schaufelfuss 3 an. Orthorhombische Titanaluminid-Legierungen basieren auf der geordneten Verbindung Ti₂AINb und haben folgende Zusammensetzung Ti-(22-27)AI-(21-27)Nb.

Weiterhin ist denkbar, dass die Hybrid-Schaufel 1 als Leitschaufel eingesetzt wird oder sie wird als Turbinenschaufel eingesetzt, bei welcher das Schaufelblatt 2 aus einer Superlegierung, beispielsweise einer Nickel-Basis-Superlegierung, besteht und der Schaufelfuss 3 aus einer Hochtemperatur-Titanlegierung oder einer intermetallischen γ-Titanaluminid-Legierung oder einer intermetallischen orthorhombischen Titanaluminid-Legierung besteht. Auch damit lassen sich Gewichtsreduktionen und eine Erhöhung die Lebensdauer der Rotor/Statorverbindung erreichen.

### Bezugszeichenliste

- 1: Hybrid-Schaufel
- 2: Schaufelblatt
- 3: Schaufelfuss
- 4: Aussparung im Schaufelfuss
- 5: Schaufelspitze
- 6: der Schaufelspitze gegenüberliegendes Ende des Schaufelblattes
- 7: Vorsprung

## Patentansprüche

1. Hybrid-Schaufel (1) für thermische Turbomaschinen mit einem aus einem metallischen Material einer bestimmten Dichte bestehenden Schaufelblatt (2) und mit einem Schaufelfuss (3), wobei der Schaufelfuss (3) im Vergleich zum Schaufelblatt (2) aus einem anderen metallischen Werkstoff mit einer geringeren Dichte besteht, und das Schaufelblatt (2) formschlüssig mit dem Schaufelfuss (3) verbunden ist, **dadurch gekennzeichnet, dass** es sich bei der besagten Schaufel (1) um eine Verdichterschaufel, insbesondere Hochdruckverdichterschaufel, handelt, bei welcher das Schaufelblatt (2) aus einem rostfreien Cr-Ni-Stahl besteht und der Schaufelfuss (3) zwecks Gewichtsreduktion aus einer Hochtemperatur-Titanlegierung oder einer intermetallischen γ-Titanaluminid-Legierung oder einer intermetallischen orthorhombischen Titanaluminid-Legierung besteht.

2. Hybrid-Schaufel (1) für thermische Turbomaschinen mit einem aus einem metallischen Material einer bestimmten Dichte bestehenden Schaufelblatt (2) und mit einem Schaufelfuss (3), wobei der Schaufelfuss (3) im Vergleich zum Schaufelblatt (2) aus einem anderen metallischen Werkstoff mit einer geringeren Dichte besteht, und das Schaufelblatt (2) formschlüssig mit dem Schaufelfuss (3) verbunden ist, **dadurch gekennzeichnet, dass** es sich bei der besagten Schaufel (1) um eine Turbinenschaufel handelt, bei welcher das Schaufelblatt (2) aus einer Superlegierung, beispielsweise einer Nickel-Basis-Superlegierung, besteht und der Schaufelfuss (3) zwecks Gewichtsreduktion aus einer Hochtemperatur-Titanlegierung oder einer intermetallischen γ-Titanaluminid-Legierung oder einer intermetallischen orthorhombischen Titanaluminid-Legierung besteht.

3. Hybrid-Schaufel (1) nach einem der Ansprüche 1 oder 2, **dadurch gekennzeichnet, dass** es sich bei der besagten Schaufel (1) um eine Laufschaufel handelt.

## Claims

1. Hybrid blade (1) for thermal turbomachines, having an airfoil (2) made of a metallic material of a certain density, and having a blade root (3), wherein the blade root (3), compared with the airfoil (2), is made of a different metallic material having a lower density, and the airfoil (2) is connected to the blade root (3) in a positive-locking manner, **characterized in that** said blade (1) is a compressor blade, in particular a highpressure compressor blade, in which the airfoil (2) is made of a stainless CrNi steel and the blade root (3) for the purpose of weight reduction is made of a high-temperature titanium alloy or an intermetallic gamma titanium aluminide alloy or an intermetallic orthorhombic titanium aluminide alloy.

2. Hybrid blade (1) for thermal turbomachines, having an airfoil (2) made of a metallic material of a certain density, and having a blade root (3), wherein the blade root (3), compared with the airfoil (2), is made of a different metallic material having a lower density, and the airfoil (2) is connected to the blade root (3) in a positive-locking manner, **characterized in that** said blade (1) is a turbine blade in which the airfoil (2) is made of a superalloy, for example a nickel-based superalloy, and the blade root (3) for the purpose of weight reduction is made of a high-temperature titanium alloy or an intermetallic gamma titanium aluminide alloy or an intermetallic orthorhombic titanium aluminide alloy.

3. Hybrid blade (1) according to either of Claims 1 and 2, **characterized in that** said blade (1) is a moving blade.

## Revendications

1. Aube hybride (1) pour turbomachines thermiques, comprenant une pâle d'aube (2) constituée d'un matériau métallique de densité déterminée et comprenant une emplanture d'aube (3), l'emplanture d'aube (3) étant constituée d'une autre matière métallique de plus faible densité par comparaison avec la pâle d'aube (2), et la pâle d'aube (2) étant reliée par engagement par complémentarité de formes à l'emplanture d'aube (3), **caractérisée en ce que** ladite aube (1) est une aube de compresseur, en particulier une aube de compresseur à haute pression, dans laquelle la pâle d'aube (2) est constituée d'un acier inoxydable Cr-Ni et l'emplanture d'aube (3) est constituée, en vue de réduire le poids, d'un alliage de titane haute température ou d'un alliage d'aluminure de titane γ intermétallique ou d'un alliage d'aluminure de titane orthorhombique intermétallique.

2. Aube hybride (1) pour turbomachines thermiques, comprenant une pâle d'aube (2) constituée d'un matériau métallique de densité déterminée et comprenant une emplanture d'aube (3), l'emplanture d'aube (3) étant constituée d'une autre matière métallique de plus faible densité par comparaison avec la pâle d'aube (2), et la pâle d'aube (2) étant reliée par engagement par complémentarité de formes à l'emplanture d'aube (3), **caractérisée en ce que** ladite aube (1) est une aube de turbine, dans laquelle la pâle d'aube (2) est constituée d'un superalliage, par exemple d'un superalliage à base de nickel, et l'emplanture d'aube (3) est constituée, en vue de réduire le poids, d'un alliage de titane haute température ou d'un alliage d'aluminure de titane γ intermétallique ou d'un alliage d'aluminure de titane orthorhombique intermétallique.

3. Aube hybride (1) selon l'une quelconque des revendications 1 et 2, **caractérisée en ce que** ladite aube (1) est une aube mobile.
